# EUROPÄISCHE PATENTANMELDUNG

(11) **EP 0 863 357 A2**
(43) Veröffentlichungstag der Anmeldung: **09.09.1998**
(21) Anmeldenummer: 98102798.0
(22) Anmeldetag: 18.02.1998
(51) Int. Cl.: F16L 37/14

(54) **Rohrverbindung**

(30) Priorität: 06.03.1997 DE 29704063 U
(71) Anmelder: REHAU AG + Co, 95111 Rehau (DE)
(72) Erfinder: Eichmann, Hans-Ludwig, 95111 Rehau (DE); Klein, Tino, 95111 Rehau (DE)

(57) **Zusammenfassung**

Die Erfindung betrifft eine Rohrverbindung (1) zweier Vortriebsrohre oder dergleichen, bei der bei zusammengesetzten Rohren (11,12) ein auf einer Seite des eines Rohres (11) ausgebildetes Steckende (111) in ein auf einer Seite des anderen Rohres (12) ausgebildetes Muffenende (121) eingreift. Jeweils am Steck- bzw. am Muffenende ist die Wanddicke der Rohre (11,12) durch eine radial nach innen bzw. radial nach außen abgesetzte Stufe (112, 122,113,123) reduziert. Weiter ist mit Abstand vom freien Ende des Steckendes (111) und mit gleichem Abstand vom freien Ende des Muffenendes (121) am äußeren Umfang des Steckendes (111) und am inneren Umfang des Muffenendes (121) jeweile eine Aufnahmenut (2) zur Bildung einer Aufnahmekammer für ein Sperrelement eingelassen. Die Erfindung wird darin gesehen, daß die Stufen (112, 122,113,123) am Steckende (111) und am Muffenende (121) spiegelbildlich konisch verlaufen.

## Beschreibung

Die Erfindung betrifft eine Rohrverbindung zweier Vortriebsrohre oder dergleichen, bei der bei zusammengesetzten Rohren ein auf einer Seite des einen Rohres ausgebildetes Steckende in ein auf einer Seite des anderen Rohres ausgebildetes Muffenende eingreift, wobei am Steck- bzw. am Muffenende die Wanddicke der Rohre durch eine radial nach innen bzw. radial nach außen abgesetzte Stufe reduziert ist und wobei mit Abstand vom freien Ende des Stegendes und mit gleichem Abstand vom freien Ende des Muffenendes am äußeren Umfang des Steckendes und am inneren Umfang des Muffenendes jeweils eine Aufnahmenut zur Bildung einer Aufnahmekammer für ein Sperrelement eingelassen ist.

Eine gattungsgemäße Rohrverbindung ergibt sich aus der DE 38 14 913 C 2. Derartige Rohre und Rohrverbindungen werden vorzugsweise in grabenlosen Verlegeverfahren eingesetzt. Hierbei werden zugfest verbundene Kurzrohre eingesetzt, die in der Regel ca. 1 m Länge besitzen. Andere Längen (0,5 m - 3,00 m) sind ebenfalls möglich. Für den Einsatz dieser Rohrstücke können Schächte üblicher Abmessungen verwendet werden, so daß hier eine kostengünstige Verlegung möglich ist.

Beim Kurzrohr-Relining können kompakte Rohrstücke oder solche mit Drainageöffnungen eingesetzt werden. Rohrstücke mit Drainageöffnungen werden in erster Linie bei der Sanierung von Deponierohrsystemen eingesetzt. Hier werden die einzelnen Rohrstücke in einem Schacht/Startgrube zusammengesetzt und in das alte, unter der Deponie verlegte Sickerleitungsrohr eingezogen.

Obwohl mit dem Kurzrohr nach dem Stand der Technik gute Ergebnisse bei der Verlegung erzielbar sind, ist das Zusammenführen von Muffe und Steckende bei dieser Rohrart nicht optimal.

Hier setzt die Erfindung ein, die es sich zur Aufgabe gestellt hat, daß Zusammenstecken von Steckende und Muffenende zu erleichtern, was sich insbesondere vor Ort im Schacht als Verlegevorteil auszeichnen soll.

Erfindungsgemäß wird dazu vorgeschlagen, daß die Stufen am Steckende und am Muffenende spiegelbildlich konisch verlaufen. Mit dieser Maßnahme wird das Einfädeln der einzelnen Rohrstücke erleichtert. Darüber hinaus wird in den kritischen Punkten der Übergänge Muffe-Vollrohr und Spitzende-Vollrohr das Material der Wandung im Verlauf der Konizität verdickt, so daß das Auftreten von Kerbspannungen in diesen Bereichen und deren schädliche Auswirkungen minimiert werden.

Es hat sich als vorteilhaft erwiesen, daß im Bereich der Aufnahmekammer für das Sperrelement die Konizität der zueinander gerichteten Wandbereiche durch axparallele Wandabschnitte unterbrochen ist. Diese Maßnahme ermöglicht es, die Aufnahmekammer für das Sperrelement außerhalb der Konizität in axparalleler Lage anzuordnen. Dies erleichtert wiederum die Einführung des Sperrelementes in die Aufnahmekammer.

Weiter erscheint es zweckmäßig, daß die axparallelen Wandabschnitte wohl im Steckende als auch im Muffenende die Konizität der Stufen auf eine definierte Länge unterbricht und konische Abschnitte gleicher Länge im Steckende und im Muffenende schafft. Diese Maßnahme dient zur optimalen Führung der beiden Rohrelemente aufeinander während des Steckvorgangs.

Es ist ferner vorteilhaft, wenn Muffenende und Steckende im Verbindungsbereich am Außenumfang angephast sind. Dadurch wird verhindert, daß eine eventuell bestehende Ovalität und gegebene Toleranzen des Rohraußendurchmessers der Rohrstücke in den Anliegebereichen negativ beeinflussen. Durch die Anphasung wird erreicht, daß in diesen Bereichen keine Absätze mehr entstehen, die während des Einziehvorganges Angriffspunkte für Steine oder sonstige Bodenbestandteile bilden können, durch die der Einziehvorgang behindert wird.

Auch kann das Muffenende am Innenumfang im Bereich des Übergangs zum Vollrohr zur Vermeidung einer Stufe mit der freien Kante des Steckendes angephast sein. Mit dieser Maßnahme wird bei den zusammengesteckten Rohrteilen in der Fließrichtung eine Kante, mit den Nachteilen im Fließverhalten, möglichen Verstopfungen und schlechterer Inspektions- und Reinigungsmöglichkeit, verhindert.

In einer zusätzlichen Ausbildung erfolgt schließlich im Bereich der Stirnflächen von Muffe und Steckende eine zusätzliche mechanische Fixierung der Rohrenden. Dies kann durch eine entsprechende Gestaltung der Endbereiche von Spitzende und Steckende erfolgen, wobei diese Endbereiche in entsprechend gestaltete Aufnahmen am Übergang zum Vollrohr an der Muffenseite sowie an der Seite des Steckendes eingreifen. Dadurch werden die Rohrstücke im Verbindungsbereich zusätzlich fixiert und können bei Krafteinwirkung nicht nach außen abheben.

Die erfindungsgemäße Rohrverbindung ist gegenüber dem Stand der Technik einfacher herzustellen und sicherer in ihrer Verbindungsstellung bei Einwirken von Kräften, die beispielsweise beim Einziehen oder Einschieben in zu sanierende Rohrstränge auftreten. Die erfindungsgemäße Rohrverbindung kann als Vollrohr durch Einlegen von Dichtringen wie Lippendichtungen als Kurzrohr für Kanalsanierungen eingesetzt werden. Dabei können im Bereich der Dichtungen die zueinander gerichteten Wandbereiche außerhalb der Konizität in axparallelem Verlauf gehalten sein.

In der Zeichnung sind Ausführungsbeispiele der erfindungsgemäßen Rohrverbindung schematisch dargestellt; es zeigt:
Fig. 1 den Verbindungsbereich zweier Rohrstücke mit scharfen Übergängen zum Vollrohr.
Fig. 2 den Verbindungsbereich gemäß Fig. 1 mit Fixierungen an den Übergängen zum Vollrohr.

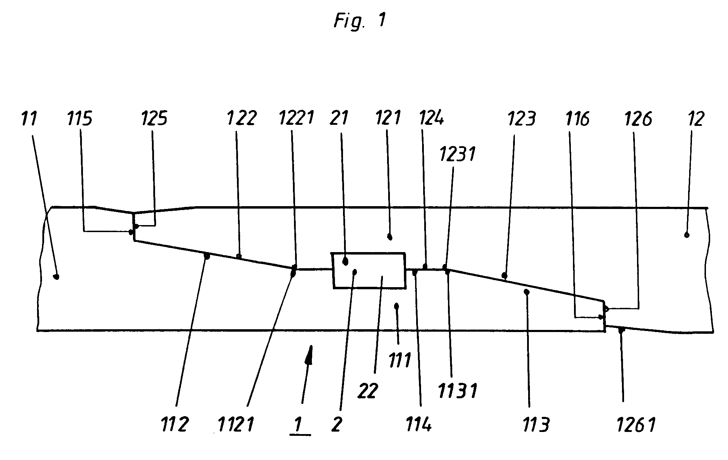

Fig. 1 zeigt die Rohrverbindung 1 mit den Rohrstücken 11, 12. Das Rohrstück 12 stellt in seinem vorderen Bereich die Rohrmuffe 121 dar, während das Rohrstück 11 in seinem vorderen Bereich das Steckende 111 bildet. Das Steckende 111 und das Muffenende 121 weisen Stufen 112, 113, 122, 123 auf, die spiegelbildlich auf gleicher Länge konisch verlaufen. Zwischen dem Endpunkt 1231, 1131 der konischen Stufe 113, 123 und dem Anfangspunkt 1221, 1121 der Stufe 112, 122 verläuft der axparallele Wandabschnitt 124, 114. Mittig im axparallelem Wandabschnitt 124, 114 ist die Aufnahmekammer 2 für das in der Zeichnung nicht dargestellte Sperrelement eingeformt.

Die Aufnahmekammer 2 besteht aus zwei spiegelbildlich angeordneten Teilkammem 21, 22, welche jeweils in den axparallelen Wandabschnitten 114, 124 in den Umfang der Rohrstücke eingearbeitet sind. Das freie Ende 125 des Muffenendes stößt in der gezeigten Darstellung an die Schulter 115 des Steckendes 111 an. In diesem Bereich ist das freie Ende 125 des Muffenendes 12 und die Schulter 115 des Steckendes 111 soweit angephast, daß mögliche Ovalitäten und aufgetretene Toleranzen des Rohraußendurchmessers keine schädlichen Absätze am äußeren Umfang mehr ergeben. Am gegenüberliegenden Bereich der Steckverbindung 1 liegt das freie Ende 116 des Steckendes 111 an der Schulter 126 des Muffenendes 121 an. Das freie Ende 116 ist in diesem Fall nicht angephast, während die Schulter 126 des Muffenendes 121 eine Phase 1261 aufweist. Diese Phase 1261 schließt aus, daß in Einzugsrichtung der Rohrstücke 11, 12 schädliche Überstände am Rohraußendurchmesser entstehen.

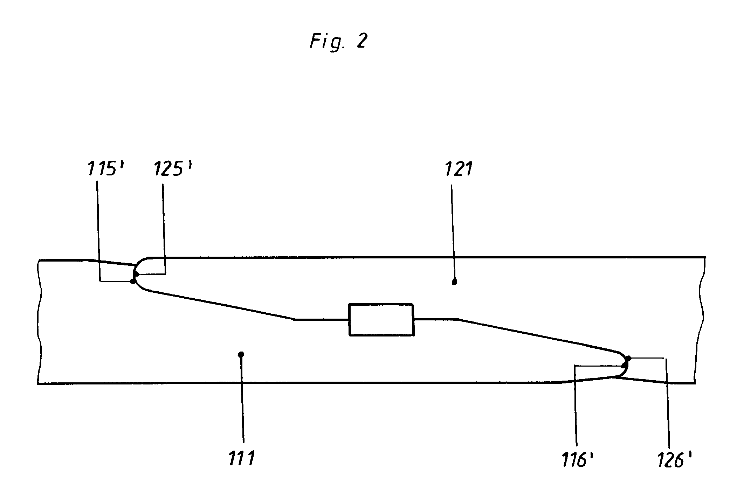

Fig. 2 zeigt den gleichen Verbindungsbereich wie Fig. 1 mit dem Unterschied, daß die freien Enden 125 des Muffenendes 121 und 116 des Steckendes 111 anders gestaltet sind als in Fig. 1 gezeigt. Das freie Ende 125' des Muffenendes 121 besitzt in der gezeigten Darstellung eine ballige Form, welche in eine ebenfalls ballig gestaltete konkave Aufnahme an der Schulter 115' des Steckendes 111 eingreift. In gleicher Weise ist das freie Ende 116' des Steckendes 111 gestaltet, welches in die ballige Aufnahme an der Schulter 126' des Muffenendes eingreift. Auf diese Weise werden Steckende 111 und Muffenende 121 beim Zusammensteckvorgang zusätzlich geführt und es wird verhindert, daß das Steckende 111 und/oder das Muffenende 121 beim Ansetzen von Einzugs- oder Vortriebskräften nach außen ausweichen können.

Außer dieser zusätzlichen Sicherung sind in der Anordnung Fig. 2 keine weiteren Abweichungen zu der Anordnung nach Fig. 1 gegeben, so daß die dortige Figurenbeschreibung auch für die Fig. 2 im weiteren zutrifft.

## Patentansprüche

1. Rohrverbindung zweier Vortriebsrohre oder dergleichen, bei der bei zusammengesetzten Rohren ein auf einer Seite des einen Rohres ausgebildetes Steckende in ein auf einer Seite des anderen Rohres ausgebildetes Muffenende eingreift, wobei am Steck- bzw. am Muffenende die Wanddicke der Rohre durch eine radial nach innen bzw. radial nach außen abgesetzte Stufe reduziert ist und wobei mit Abstand vom freien Ende des Steckendes und mit gleichem Abstand vom freien Ende des Muffenendes am äußeren Umfang des Steckendes und am inneren Umfang des Muffenendes jeweils eine Aufnahmenut zur Bildung einer Aufnahmekammer für ein Sperrelement eingelassen ist, dadurch gekennzeichnet, daß die Stufen (112, 122, 113, 123) am Steckende (111) und am Muffenende (121) spiegelbildlich konisch verlaufen.

2. Rohrverbindung nach Anspruch 1, dadurch gekennzeichnet, daß im Bereich der Aufnahme (2) für das Sperrelement die Konizität der zueinander gerichteten Wandbereiche durch axparallele Wandabschnitte (114, 124) unterbrochen ist.

3. Rohrverbindung nach Anspruch 1, dadurch gekennzeichnet, daß die axparallelen Wandabschnitte (114, 124) sowohl im Steckende (111) als auch im Muffenende (121) die Konizität der Stufen (112, 122, 113, 123) auf eine definierte Länge unterbricht und konische Abschnitte gleicher Länge im Steckende (111) und im Muffenende (121) schafft.

4. Rohrverbindung nach Ansprüchen 1, 2 und 3, dadurch gekennzeichnet, daß Muffenende (121) und Steckende (111) im Verbindungsbereich am Außenumfang angephast sind.

5. Rohrverbindung nach Anspruch 1, dadurch gekennzeichnet, daß das Muffenende (121) am Innenumfang im Bereich des Übergangs zum Vollrohr zur Vermeidung einer Stufe mit dem freien Ende (116) des Steckendes (111) angephast ist.

6. Rohrverbindung nach einem oder mehreren der vorangegangenen Ansprüche, dadurch gekennzeichnet, daß im Bereich der Stirnflächen (125, 116) von Muffenende (121) und Steckende (111) eine zusätzliche mechanische Fixierung der Rohrenden (11, 12) erfolgt.
